# EUROPEAN PATENT SPECIFICATION

(11) **EP 3 851 421 B1**
(45) Date of publication and mention of the grant of the patent: **17.06.2026**
(21) Application number: 20216738.3
(22) Date of filing: 22.12.2020
(51) Int. Cl.: C03C 17/00, A61J 1/14, B65D 23/08

(54) **GLASS CONTAINER FOR PHARAMCEUTICAL, MEDICAL OR COSMETIC APPLICATIONS**
GLASBEHÄLTER FÜR PHARMAZEUTISCHE, MEDIZINISCHE ODER KOSMETISCHE ANWENDUNGEN
RÉCIPIENT EN VERRE POUR DES APPLICATIONS MÉDICALES, PHARMACEUTIQUES OU COSMÉTIQUES

(30) Priority: 16.01.2020 DE 202020100215 U; 16.01.2020 DE 202020100219 U; 17.01.2020 DE 202020100245 U
(43) Date of publication of application: 21.07.2021
(73) Proprietor: SCHOTT Pharma AG & Co. KGaA, 55122 Mainz (DE)
(72) Inventor: MANGOLD, Stephanie, 55288 Schornsheim (DE); FRATZER, Oliver, 63329 Egelsbach (DE); ANTON, Andrea, 55595 Hüffelsheim (DE); RUDIGIER-VOIGT, Eveline, 55128 Mainz (DE); WASCHBÜSCH, Michael, 55278 Undenheim (DE)
(74) Representative: Blumbach · Zinngrebe Patentanwälte PartG mbB

(56) References cited:
- EP-A1- 3 560 897
- EP-B1- 3 560 897
- WO-A1-2014/005030

## Description

The invention relates to a glass container for pharmaceutical, medical or cosmetic applications.

Glass containers which are used as packaging material for pharmaceutical, medical or cosmetic applications are usually subjected to further processing steps after their hot forming before they are finally filled or distributed. Typical processing steps after hot forming are, for example, washing, followed by drying or sterilization to meet the high requirements, such as low particle load or sterility of the glass containers, for pharmaceutical, medical or cosmetic applications.

However, a drawback of such processed, known glass containers is that the glass containers usually exhibit scratches or at least slightest damage on their surface due to direct contact with their environment, such as system components or other glass containers, which might act as initial defects for breakage and can lead to a reduced strength of the glass containers. A further drawback of scratches or damage to the container surface is the loss of the flawless optical impression of the glass containers. A further drawback of such processed, known glass containers can be the presence of undesirable substances inside the glass container, which is undesirable in view of their pharmaceutical, medical or cosmetic use.

EP 3 560 897 A1 describes a process for making a functionalised hollow body, the process comprising providing a hollow body, comprising a wall which at least partially surrounds an interior volume of the hollow body, wherein the wall comprises a layer of glass, and has a wall surface, comprising a surface region; the process further comprising at least partially superimposing the layer of glass in the surface region with a functionalising composition precursor on a side of the layer of glass which faces away from the interior volume, wherein the functionalising composition precursor comprises one or more siloxanes; and the process further comprising at least partially contacting the functionalising composition precursor with a plasma, thereby obtaining the functionalised hollow body, comprising a functionalising composition which at least partially superimposes the layer of glass in the surface region on the side of the layer of glass which faces away from the interior volume.

WO 2014/005030 A1 describes delamination resistant glass containers with heat-tolerant coatings, wherein in one embodiment, a glass container includes a glass body having an interior surface, an exterior surface and a wall thickness extending from the exterior surface to the interior surface, wherein at least the interior surface of the glass body is delamination resistant, and wherein the glass container further includes a heat-tolerant coating positioned on at least a portion of the exterior surface of the glass body, wherein the heat-tolerant coating is thermally stable at temperatures greater than or equal to 260°C for 30 minutes.

Therefore, it is an object of the invention to provide a glass container, which has an increased strength and an improved, preferably flawless, optical impression. It is also an object of the invention to provide a glass container which has an increased strength and at the same time is free from undesirable substances on the container inside, and to avoid cosmetic defects.

To this end, the invention discloses a glass container, in particular vial for pharmaceutical, medical or cosmetic applications, which, in particular, is manufactured or manufacturable by means of a method specified further below in the context of this disclosure.

The glass container according to the invention comprises a hollow body of a glass material, the hollow body surrounding an inner volume and having a lower end and an upper end, and wherein a container opening extends through the upper end into the inner volume.

Furthermore, the hollow body comprises a container collar surrounding the container opening, a container neck, a container shoulder, a container body, a container bottom closing the lower end, as well as an inner container surface facing the inner volume and an outer container surface facing away from the inner volume. The container body is to be understood, in particular, as the cylindrical section of a glass container.

The glass container according to the invention is characterized in that the glass container is coated on its outer container surface at least partially with a coating.

Preferably, the glass container has an increased scratch resistance, in particular with respect to a contact of the glass container with at least one further glass container.

The coating applied at least partially on the outer surface of the container and the resulting increased scratch resistance is advantageous in ensuring increased strength of the glass container and at the same time improves the optical impression.

In a first aspect, the glass container may have a transmittance for light with a wavelength of 350 nm which is higher than 0.7, preferably higher than 0.71, more preferably higher than 0.72, still more preferably higher than 0.73 and particularly preferably higher than 0.74.

Further, the glass container may have a transmittance for light with a wavelength of 550 nm which is higher than 0.73, preferably higher than 0.74, more preferably higher than 0.75, still more preferably higher than 0.76 and particularly preferably higher than 0.77.

The glass container may also have a transmittance for light with a wavelength of 750 nm which is higher than 0.74, preferably higher than 0.75, more preferably higher than 0.76, still more preferably higher than 0.77 and particularly preferably higher than 0.78.

The transmittance may be measurable at least at one point in the region of the container body, preferably directly above the container bottom or directly below the container shoulder, and particularly preferably at any point in the region of the container body, in particular when the light passes radially and centrally through the glass container such that the light first passes through the hollow body, then through the inner volume and then again through the hollow body.

The glass container exhibits the aforementioned transmittance preferably after contact of the glass container with at least one further glass container.

In a second aspect, which is compatible with the first aspect, the glass container may have a yellowness index which is lower than 2.5, preferably lower than 2.0, more preferably lower than 1.5, still more preferably lower than 1.25 and most preferably lower than 1.0.

The yellowness index may be measurable at least at one point in the region of the container body, preferably directly above the container bottom or directly below the container shoulder, and particularly preferably at any point in the region of the container body, according to ASTM D1925-70, in particular when the light passes radially and centrally through the glass container such that the light first passes through the hollow body, then through the inner volume and then again through the hollow body.

The glass container exhibits the yellowness index preferably after contact of the glass container with at least one further glass container.

In a third aspect, which is compatible with the first and/or second aspect, the outer container surface of the glass container may have a mean roughness Rₐ which is lower than 20 nm, preferably lower than 15 nm, more preferably lower than 10 nm, still more preferably lower than 5 nm and particularly preferably lower than 2.5 nm.

The average roughness value Rₐ may be measurable at least at one point in the region of the container body, preferably directly above the container bottom or directly below the container shoulder, and particularly preferably at each point in the region of the container body, preferably by means of white light interference microscopy.

The glass container exhibits the mean roughness Rₐ preferably after contact of the glass container with at least one further glass container.

Regarding all three aspects, the contact of the glass container with at least one further glass container may comprise a contact in which the container body of the glass container is in contact with the container body of at least one further glass container of the same type, and the at least two glass containers preferably were shaken for a period of at least 5 minutes, more preferably at least 10 minutes, particularly preferably at least 30 minutes, in particular in the radial direction. The shaking of the at least two glass containers may preferably be performed by means of a laboratory shaker, for example with a shaking frequency of 400 rpm and an amplitude of 1 cm.

The contact may further comprise that, before the shaking, the glass containers were heated for 1 min to 60 min, preferably 10 min to 50 min, more preferably 20 min to 40 min, most preferably 30 min, to 100°C to 600°C, preferably 200°C to 500°C, more preferably 300°C to 400°C, most preferably 350°C.

The contact may further comprise that, between the heating and the shaking less than 8 hours, preferably less than 5 hours, more preferably less than 3 hours, most preferably less than 1 hour, have/has passed.

The contact may further comprise that, before the heating, the glass containers were immersed in a bath of water, preferably distilled water, at a temperature of 40°C to 100°C, preferably 50°C to 95°C, more preferably 60°C to 90°C, most preferably 80°C, for 1 s to 20 min, preferably 1 min to 15 min, more preferably 3 min to 10 min, most preferably 5 min.

Furthermore, a glass container may be provided which, after passing through a test program, meets one or more of the following parameters:
wherein the glass container has a transmittance for light with a wavelength of 350 nm which is higher than 0.7, preferably higher than 0.71, more preferably higher than 0.72, still more preferably higher than 0.73 and particularly preferably higher than 0.74 and/or
wherein the glass container has a transmittance for light with a wavelength of 550 nm which is higher than 0.73, preferably higher than 0.74, more preferably higher than 0.75, still more preferably higher than 0.76 and particularly preferably higher than 0.77 and/or
wherein the glass container has a transmittance for light with a wavelength of 750 nm which is higher than 0.74, preferably higher than 0.75, more preferably higher than 0.76, still more preferably higher than 0.77 and particularly preferably higher than 0.78,
wherein the transmittance is measurable at least at one point in the region of the container body, preferably directly above the container bottom or directly below the container shoulder, and particularly preferably at any point in the region of the container body, in particular when the light passes radially and centrally through the glass container such that the light first passes through the hollow body, then through the inner volume and then again through the hollow body, and/or
wherein the glass container has a yellowness index which is lower than 2.5, preferably lower than 2.0, more preferably lower than 1.5, still more preferably lower than 1.25 and most preferably lower than 1.0,
wherein the yellowness index is measurable at least at one point in the region of the container body, preferably directly above the container bottom or directly below the container shoulder, and particularly preferably at any point in the region of the container body, according to ASTM D1925-70, in particular when the light passes radially and centrally through the glass container such that the light first passes through the hollow body, then through the inner volume and then again through the hollow body and/or
wherein the outer container surface of the glass container has a mean roughness Rₐ which is lower than 20 nm, preferably lower than 15 nm, more preferably lower than 10 nm, still more preferably lower than 5 nm and particularly preferably lower than 2.5 nm,
wherein the mean roughness Rₐ is measurable at least at one point in the region of the container body, preferably directly above the container bottom or directly below the container shoulder, and particularly preferably at each point in the region of the container body, preferably by means of white light interference microscopy, and
wherein the running through the test program comprises the following steps: heating the glass containers to 350°C for 30 minutes, bringing the glass container into contact with at least one further glass container so that the container body of the glass container is in contact with the container body of at least one further glass container of the same type, and shaking the at least two glass containers for a period of 5 minutes, preferably 10 minutes, more preferably 30 minutes, in particular in the radial direction, wherein the shaking of the at least two glass containers preferably is performed by means of a laboratory shaker, for example with a shaking frequency of 400 rpm and an amplitude of 1 cm, wherein the bringing in contact and shaking is performed within 1h after heating, and optionally immersing the glass containers in a bath of water, preferably distilled water, with a temperature of 80°C for 5 min, wherein the immersing takes place before heating.

The coating with which the outer container surface is at least partially coated, may comprise a silicone. Preferably, the coating is recommended by the German Federal Institute for Risk Assessment (BfR) for contact with foodstuffs and/or approved as a medical product by the German Federal Office for Drugs and Medical Devices (BfArM). Further, the coating may be formed as a dried silicone emulsion, which, preferably, is post-cured. In particular, the coating may be manufactured and/or manufacturable according to a coating method and/or with a coating material as described further below.

Furthermore, the outer container surface may be coated with the coating such that the glass material of the hollow body is covered with the coating within a coated partial area of the outer container surface.

Accordingly, the glass material of the hollow body can be covered with a coating in the region of the coated partial surface of the outer container surface, wherein not necessarily the entire region of the coated partial surface needs to be covered with a coating. Instead, it is also possible that there are insular gaps within the coated partial surface, e.g. at the container bottom or elsewhere.

The coated partial surface of the outer container surface, in whose area the glass material is covered with a coating, preferably encloses the region of the container body and/or the region of the container bottom at least partially, in particular completely.

Furthermore, the outer container surface may be coated with the coating such that the outer container surface is partially uncoated such that the glass material of the hollow body is exposed over an uncoated partial area of the outer container surface.

The uncoated partial area of the outer container surface preferably corresponds to the entire outer container surface minus the coated partial area of the outer container surface.

The uncoated partial area of the outer container surface may completely enclose the region of the container collar and preferably the region of the container neck and particularly preferably may enclose the region of the container shoulder at least partially, in particular completely.

Furthermore, the glass container may be configured such that the inner container surface is completely uncoated such that the glass material of the hollow body is exposed over the entire inner container surface.

Accordingly, the inner container surface may be completely exposed, i.e. in particular over the area of the container bottom, the area of the container body, the area of the container shoulder, the area of the container neck and the area of the container collar.

In particular, the coating covering the outer container surface in the region of the coated partial area may be characterized by an adhesion to the glass material or configured such that no migration of coating material onto the inner container surface occurs, in particular after storage of the container for at least 1 week, preferably at least 3 weeks, more preferably at least 6 weeks.

For example, a glass container according to the invention may comprise a hollow body of a glass material, said hollow body surrounding an inner volume and having a lower end and an upper end, and wherein a container opening extends through said upper end into said inner volume, and wherein said hollow body further comprises a container collar surrounding the container opening, a container neck, a container shoulder, a container body, a container bottom closing the lower end, and an inner container surface facing the inner volume and an outer container surface facing away from the inner volume, wherein the glass container is characterized on the one hand in that the outer container surface is partially coated such that the glass material of the hollow body is covered with a coating in the area of a coated partial surface of the outer container surface and that the outer container surface is partially uncoated such that the glass material of the hollow body is exposed over an uncoated partial surface of the outer container surface, and wherein the inner container surface is completely uncoated such that the glass material of the hollow body is exposed over the entire inner container surface.

The coating, which covers the outer container surface in the region of the container body, has at least at one point an equivalent thickness related to the glass material of less than 50 nm, preferably of less than 25 nm, more preferably of less than 10 nm and particularly preferably of less than 5 nm.

Further, the coating, which covers the outer container surface in the region of the container bottom, has at least at one point an equivalent thickness with respect to the glass material of less than 200 nm, preferably of less than 100 nm, more preferably of less than 50 nm and particularly preferably of less than 25 nm.

The above-mentioned equivalent thickness with respect to the glass material is determinable by determining a sputter rate by means of secondary ion mass spectrometry (ToF-SIMS) on the basis of a reference glass and using this sputter rate for evaluating the secondary ion mass spectrometry of the coating.

Specifically, the sputter rate can be determined using BK7 as the reference glass and using Cs, 2 keV as the sputtering parameter. For this purpose, the ion current and the grating area can first be noted and a sputter crater can be generated. Then the depth of the sputter crater can be measured, e.g. with white light interferometry (WLI), to obtain a sputter rate, for example in the unit nm/s, especially for BK7 depending on ion current and grating area.

When a depth profile of the coating is acquired, i.e. a depth profile is measured on the coated glass container, the sputtering time can be converted directly into an equivalent depth for the same ion current and grating area. If the ion current deviates, the equivalent depth increases proportionally to the current; if the area deviates, the equivalent depth is antiproportional to the area.

The above-mentioned equivalent thickness of the coating, which covers the outer container surface in the region of the container body, is preferably given at least at one point. It may also be provided that the equivalent thickness is given over an area proportion of the container body of at least 90 percent, preferably at least 95 percent, particularly preferably at least 99 percent.

Likewise, the equivalent thickness of the coating, which covers the outer container surface in the region of the container bottom, may be given over an area proportion of the container bottom of at least 90 percent, preferably at least 95 percent, particularly preferably at least 99 percent.

The equivalent thickness of the coating which covers the outer container surface in the region of the container body and the equivalent thickness of the coating which covers the outer container surface in the region of the container bottom may be in a ratio to one another which is in the range from 1:10 to 10:1, preferably in the range from 1:10 to 1:1 or in the range from 1:1 to 10:1.

As explained in more detail below, the coated partial surface of the outer container surface may form a contact angle between 10 and 12 degrees with respect to hexadecane and/or may form a contact angle between 90 and 120 degrees with respect to water.

The uncoated partial surface of the outer container surface and preferably the entire inner container surface may form a contact angle of less than 10 degrees with respect to hexadecane and/or may form a contact angle of less than 10 degrees with respect to water.

Preferably, the glass container and/or the glass material is of a type selected from the group consisting of a borosilicate glass, an aluminosilicate glass, soda lime glass and fused silica. "Soda lime glass" according to the invention is an alkaline/alkaline earth/silicate glass according to table 1 of ISO 12775 (1st edition 1997-10-15).

The glass container as described above is in particular manufactured or manufacturable by a method described below.

The method includes that a plurality of glass containers is simultaneously subjected to a first processing step and thereafter the plurality of glass containers is simultaneously subjected to a second processing step, wherein before and/or during the first and/or second processing step the outer container surface of the glass container is contact-free or in contact with a material having a lower hardness than that of the glass container or only in contact with such materials.

In particular, it may be preffered that before and/or during the first and/or second processing step less than 20 percent of the outer container surface, preferably less than 10 percent of the outer container surface, more preferably less than 5 percent of the outer container surface, and most preferably less than 2 percent of the outer container surface is in contact with a material, in particular a material having a lower hardness than that of the glass container.

The part of the outer container surface that may come into contact with a material is preferably located at the upper end of the glass container, preferably above the container shoulder and for example at the container neck and/or the container collar.

According to an embodiment the contact provides for holding the glass container, is preferably at its upper end, in particular at its container collar and/or its container neck, more preferably such that the glass container is secured by the container collar against a downward movement.

According to an embodiment each glass container of the plurality of glass containers is held individually and without contact with respect to the other glass containers.

Preferably the method further comprises that before and/or during the first and/or second processing step, the inner container surface of the glass container is contact-free, in particular by sealingly closing the container opening of the glass containers in order to prevent substances from penetrating into the inner volume, in particular to prevent penetration of liquids and solids into the inner volume, and preferably also to prevent penetration of gases or gaseous compounds into the inner volume.

Furthermore, a third, a fourth and possibly even more processing steps may be included, wherein before and/or during the third, fourth and/or further processing steps, the outer container surface of the glass container is contact-free or in contact with a material having a lower hardness than that of the glass container or only in contact with such materials and, preferably, the inner container surface of the glass container is contact-free, in particular by sealingly closing the container opening of the glass containers in order to prevent substances from penetrating into the inner volume.

According to an embodiment in each processing step the plurality of glass containers is simultaneously processed, preferably in an individual processing station.

According to an embodiment in each processing step the plurality of glass containers is simultaneously held by a capturing device, the capturing device preferably being adapted to simultaneously capture and hold the plurality of glass containers.

For example, the method may comprise that the plurality of glass containers is simultaneously cleaned, such that the outside surface of the glass containers is cleaned with a cleaning fluid and/or the plurality of glass containers is simultaneously coated such that the outer container surface of the glass containers is coated with a coating material, the coating preferably being performed after the cleaning, the cleaning preferably being the first processing step, and the coating preferably being the second processing step, and wherein before and/or during the cleaning and/or coating the outer container surface of the glass container is contact-free or in contact with a material having a lower hardness than that of the glass container or only in contact with such materials and, preferably, the inner container surface of the glass container is contact-free, in particular by sealingly closing the container opening of the glass containers.

The cleaning of the glass containers may comprise ultrasonic cleaning.

The coating of the glass containers may be performed by dipping the glass container into a coating material, wherein the coating material preferably comprises silicone or an emulsion with silicone and water, preferably being a silicone emulsion.

The coating material may, for example, be a silicone emulsion with a silicone content between 0.4 and 7 weight percent of the silicone emulsion or comprise such a silicone emulsion. Preferably, the coating material, in particular, the emulsion also includes solvents, more preferably propylene glycol. The coating material, in particular the silicone emulsion, may be formed such that it post-cures under the influence of temperature.

Due to the requirements for the pharmaceutical, medical or cosmetic application of coated glass containers, the coating material, in particular, the silicone is preferably recommended by the German Federal Institute for Risk Assessment (BfR) for contact with foodstuffs and more preferably is approved as a medical product by the German Federal Office for Drugs and Medical Devices (BfArM),

The coating material may, for example, comprise a 35% dimethicone emulsion, wherein the coating material may preferably also include water. Specifically, the coating material may comprise the Dow Corning^{®} 365, 35% Dimethicone NF emulsion and/or the Dow Corning^{®} 366 35% Dimethicone NF emulsion.

Preferably, the glass containers are first dipped with the container bottom into the coating material and then further up to an upper limit, in particular at an upper edge of the glass containers, wherein the upper limit is preferably located in the area of the container shoulder, more preferably in the transition area from the container shoulder to the cylindrical container body.

Furthermore, the glass containers are preferably removed again from the coating material, wherein, subsequently, the coating may be homogenized, for example by removing or smoothing a drop of coating material formed at the container bottom. To this end, the plurality of glass containers, in particular their outer container surface, in particular the container bottom, may be dipped into a solvent or advanced to the surface of a solvent or advanced to a smoothing device.

The homogenization, which may occur after coating the glass containers, in particular after removing the glass containers from the coating material, may be a further processing step in which the glass containers are preferably simultaneously processed

According to an embodiment before and/or during the homogenization the outer container surface of the glass container is contact-free or in contact with a material having a lower hardness than that of the glass container or only in contact with such materials. Preferably, the inner container surface of the glass container is contact-free, in particular by sealingly closing the container opening of the glass containers (10).

The method may further comprise drying the coating material, the drying preferably being a further processing step in which the glass containers are preferably simultaneously processed, wherein during the drying the outer container surface of the glass container preferably is contact-free or in contact with a material having a lower hardness than that of the glass container or only in contact with such materials and, preferably, the inner container surface of the glass container is contact-free, in particular by sealingly closing the container opening of the glass containers in order to prevent substances from penetrating into the inner volume.

The drying of the coating material may in particular be performed by waiting and/or adding heat. The drying may also be performed by application of vacuum or microwave radiation.

The plurality of glass containers is simultaneously transported between the processing steps, in particular by means of a transport device as described in this document.

Preferably, the glass containers are transported such that the outer container surface of the glass container is contact-free or in contact with a material having a lower hardness than that of the glass container or only in contact with such materials and, preferably, the inner container surface of the glass container is contact-free, in particular by sealingly closing the container opening of the glass containers in order to prevent substances from penetrating into the inner volume.

Preferably, the transport device is adapted to move the capturing device from one processing station to the next processing station such that the plurality of glass containers held by the capturing device is simultaneously transported from one processing station to the next processing station.

The plurality of glass containers may be held during the processing steps and/or during the transporting such that each glass container is held individually and contact-free with respect to the other glass containers, and, preferably, the container opening of the glass containers is sealingly closed, in particular by means of the capturing device as described in this document.

It may also be provided that the plurality of glass containers is held continuously during the processing steps and, preferably, further held during transport, and wherein preferably the container opening of the glass containers is sealingly closed meanwhile.

The method as described above can in particular be carried out by an apparatus for processing, in particular for cleaning and coating, glass containers, the apparatus comprising a capturing device, at least two processing stations and a transport device.

The glass containers, which are processed with the apparatus, are preferably configured as vials for pharmaceutical, medical or cosmetic applications, comprising, in particular, a hollow body surrounding an inner volume, having a lower end closed by a container bottom, a cylindrical container body, an upper end with a container shoulder, a container neck, a container collar and a container opening which extends into the inner volume of the glass container, and an inner container surface facing the inner volume and an outer container surface facing away from the inner volume.

The capturing device of the apparatus is adapted to simultaneously capture and hold a plurality of glass containers, wherein the capturing device comprises a plurality of individual holding sockets, each adapted to capture and hold one of the glass containers individually and contact-free with respect to the other glass containers.

The at least two processing stations of the apparatus are each adapted to simultaneously subject the plurality of glass containers held by the capturing device to a specific processing step.

Furthermore, the transport device of the apparatus is adapted to move the capturing device from one processing station to the next processing station such that the plurality of glass containers held by the capturing device is simultaneously transported from one processing station to the next processing station.

Preferably, the individual holding sockets of the capturing device are each designed to hold the glass container at its upper end, in particular at its container collar and/or its container neck, in such a way that the glass container is secured by the container collar against downward movement, for example by the holding sockets clasping the container collar and/or the container neck.

For example, the individual holding sockets of the capturing device can each comprise a first and a second holding body, wherein the two holding bodies are designed to be movable with respect to each other.

Preferably, the individual holding sockets of the capturing device are each designed to hold the glass container at its upper end, in particular at its container collar and/or its container neck, in such a way that the glass container is secured against downward movement by the container collar, for example by the holding sockets clasping the container collar and/or the container neck.

For example, the individual holding sockets of the capturing device may each comprise a first and a second holding body, wherein the two holding bodies are designed to be movable relative to each other.

In particular, the two holding bodies are designed to be movable apart in such a way that a distance between the two holding bodies can be increased so that the two holding bodies of the holding socket can be placed over the container collar of the glass container from above, wherein the distance can preferably be increased to a limited extent so that the two holding bodies of the holding socket cannot be placed over the container bottom of the glass container from below.

In addition, the two holding bodies are, in particular, designed to be movable relative to each other in such a way that the distance between the two holding bodies is reducible again, so that the two holding bodies of the holding socket hold the glass container at its upper end, in particular at its container collar and/or its container neck, for example by clasping it.

In a further embodiment of the invention, the capturing device comprises one or more capturing strips, which each have a first strip arm and a second strip arm, wherein the capturing strips each comprise at least some of the holding sockets, and wherein the first strip arm of a capturing strip forms the first holding bodies of the holding sockets and the second strip arm forms the second holding bodies of the holding sockets.

Preferably the capturing device comprises at least 2 holding sockets, in particular at least 10 holding sockets, preferably at least 25 holding sockets, more preferably at least 50 holding sockets, and particularly preferably at least 100 holding sockets.

The plurality of holding sockets of the capturing device can be arranged in a regular grid, for example a two-dimensional matrix, preferably in such a way that the capturing device comprises a plurality of, in particular equidistantly arranged, capturing strips each with a plurality of, in particular equidistantly arranged, holding sockets.

For example, the capturing device may comprise at least 2 capturing strips each with at least 2 holding sockets, preferably at least 3 capturing strips each with at least 3 holding sockets, more preferably at least 5 capturing strips each with at least 5 holding sockets, and particularly preferably at least 7 capturing strips each with at least 7 holding sockets.

In a preferred embodiment, the capturing device has at least one sealing element which can be brought into sealing contact with the upper end of a glass container held by the capturing device, in particular the container collar, in such a way that the container opening is sealed tightly in order to prevent the entry of substances into the inner volume, in particular during a processing step at one of the processing stations.

The at least one sealing element is preferably designed such that it can be brought simultaneously into sealing contact with the upper ends of several glass containers held by the capturing device in such a way that the container openings of all these glass containers are simultaneously sealed tightly.

Furthermore, the capturing device preferably comprises pressing means adapted to press the upper end of the glass container held by the capturing device and the sealing element against each other in order to bring the upper end of the glass container into sealing contact with the sealing element.

The pressing means is preferably designed such that the upper end of the glass container is pressed against the sealing element, which is preferably fixedly attached to the capturing device, when the capturing device captures the glass container.

The pressing means can, for example, be designed as an edge of the first and/or second holding body being inclined with respect to the longitudinal axis of a glass container held by the capturing device.

The capturing device, in particular its holding sockets, in particular its holding body, advantageously comprise a first contact area which comes into contact with the glass container during the capturing and holding of the glass container.

This first contact area can comprise or consist of a material which has a lower hardness than Shore D 95, preferably a lower hardness than Shore D 90, particularly preferably a lower hardness than Shore D 85. A hardness of at least Shore D 40 can be advantageous. In this respect, reference is made to ISO standard 7619-1. A hardness lower than Brinell 20 may also be used, wherein reference is made to ISO standards 6506-1 to 6506-4.

The first contact area may comprise or consist of a material recommended by the German Federal Institute for Risk Assessment (BfR) for contact with foodstuffs.

Furthermore, the first contact area may comprise or consist of one of the following materials: PU, PVC, rubber, silicone, fluorosilicone, PTFE or a similar material, wherein the material can preferably be a bulk material or a foam.

The sealing element may advantageously have a second contact area, which comes into contact with the glass container when capturing and holding the glass container.

This second contact area may include or consist of a material which is less hard than Shore A 75, preferably less hard than Shore A 65.

Further, the second contact area may include or consist of a material recommended by the German Federal Institute for Risk Assessment (BfR) for contact with foodstuffs.

The second contact area may also include or consist of one of the following materials: PU, PVC, rubber, silicone, fluorosilicone, PTFE or a similar material, wherein the material can preferably be a bulk material or a foam.

The sealing element and the second contact area can at least partially consist of the same material, or preferably consist of the same material.

In the following, some examples of possible processing stations of the apparatus according to the invention are described.

Accordingly, the apparatus comprises in particular a processing station designed as a washing station for simultaneously washing the plurality of glass containers held by the capturing device in such a way that the outer container surface of the glass container is washed with a washing fluid, and in particular in such a way that during this no washing fluid reaches the inner container surface of the glass container, and in particular in such a way that the outer container surface of the glass container only comes into contact with materials which have a lower hardness than that of the glass container. Hardness of the glass container is understood to be the hardness of the glass material of the glass container. The hardness of any materials that may come into contact with the glass container is thereforelower than that of the glass material, wherein to determine the hardness, in particular the Mohs hardness can be used. In other words, it may be provided that the glass material can scratch the materials in contact with it.

Furthermore, the apparatus comprises in particular a processing station designed as a coating station for simultaneously coating the plurality of glass containers held by the capturing device in such a way that the outer container surface of the glass container is coated with a coating material, and in particular in such a way that during this no coating material reaches the inner container surface of the glass container, and in particular in such a way that the outer container surface of the glass container only comes into contact with materials which have a lower hardness than that of the glass container.

Furthermore, the apparatus may include a processing station designed as a homogenization station in order to simultaneously homogenize the coating on the plurality of glass containers held by the capturing device, such as, for example, smoothing and/or removing a drop of coating material formed at the container bottom, in particular in such a way that the outer container surface of the glass container, in particular the container bottom, is immersed in a solvent or is brought to the surface of a solvent, in particular in such a way that in the process no solvent reaches the inner container surface of the glass container, and in particular in such a way that the outer container surface of the glass container comes into contact only with materials which have a lower hardness than that of the glass container.

Alternatively, the processing station designed as a homogenization station can comprise at least one smoothing device, preferably a plurality, corresponding to the plurality of glass containers, of smoothing devices, wherein the smoothing device is designed in particular as a pointed rod and/or preferably consists of a material with a lower hardness than that of the glass container, in order to smooth and/or remove, preferably simultaneously, on the plurality of glass containers held by the capturing device, a drop of coating material formed in each case on the container base, in particular in such a way that the outer container surface of the glass container, in particular the container bottom, is brought up to the smoothing device, and in particular in such a way that the outer container surface of the glass container does not come into contact with the smoothing device.

Furthermore, the homogenization station can also include a suck-off device to homogenize the coating, e.g. to smooth and/or remove a drop of coating material formed at the container bottom. It is also possible that the homogenization station includes a device for moving the glass containers, in particular a device for shaking and/or rotating the glass containers to achieve homogenization.

In addition, the apparatus may include a processing station designed as a drying station for simultaneously drying the plurality of glass containers held by the capturing device, in particular in such a way that the outer container surface of the glass container comes into contact only with materials having a lower hardness than that of the glass container.

The capturing device of the apparatus may be arranged to hold the plurality of glass containers continuously during the processing steps to be carried out at the at least two processing stations and preferably further during the transport from one processing station to the next processing station by the transport device.

In addition, the capturing device of the apparatus may be adapted to close the container opening of a glass container held by the capturing device by means of the sealing element continuously during the processing steps to be carried out at the at least two processing stations and preferably further to close it during the transport from one processing station to the next processing station carried out by the transport device.

In order to ensure processing under clean room conditions, it may further be provided that the apparatus, in particular the processing station designed as a washing station, the processing station designed as a coating station, the processing station designed as a homogenization station and/or the processing station designed as a drying station, comprises an air flow system, in particular for generating a laminar air flow.

In what follows, preferred embodiments of the invention are described with reference to the figures.
- Fig. 1: shows (a) a schematic illustration of a glass container, (b) a schematic illustration of a glass container at least partially coated with a coating on its outer container surface,
- Fig. 2: shows a schematic illustration of a glass container in a laboratory shaker which is in contact with other glass containers,
- Fig. 3: shows (a) photographs taken with 10x focus of a glass container according to the invention after contact with other glass containers for four periods of time, (b) photographs taken with 10x focus of a glass container of the state of the art after contact with other glass containers for four periods of time,
- Fig. 4: shows measurement results presented as a diagram of the spectral transmittance of a glass container of the state of the art,
- Fig. 5: shows measurement results presented as a diagram of the spectral transmittance of a glass container according to the invention,
- Fig. 6: shows photographs of a glass container in a device for determining the spectral transmittance,
- Fig. 7: shows (a) measurement results presented as a diagram of the contact angle of hexadecane on the outer container surface of a glass container according to the invention, (b) on the outer container surface of a glass container of the state of the art,
- Fig. 8: shows (a) measurement results presented as a diagram of the contact angle of water on the outer container surface of a glass container according to the invention, (b) on the outer container surface of a glass container of the state of the art,
- Fig. 9: shows a photograph of a sawn glass container with marked test points on the inner container surface,
- Fig. 10: shows measurement results presented as a diagram of specific depth profiles of selected secondary ions on the outer container surface at the bottom, acquired using secondary ion mass spectrometry (ToF-SIMS),
- Fig. 11: shows measurement results presented as a diagram of specific depth profiles of selected secondary ions on the outer container surface at the container body at the center, acquired using secondary ion mass spectrometry (ToF-SIMS),
- Fig. 12: shows measurement results presented as a diagram of specific depth profiles of selected secondary ions on the inner container surface at the container body at the center, acquired using secondary ion mass spectrometry (ToF-SIMS).

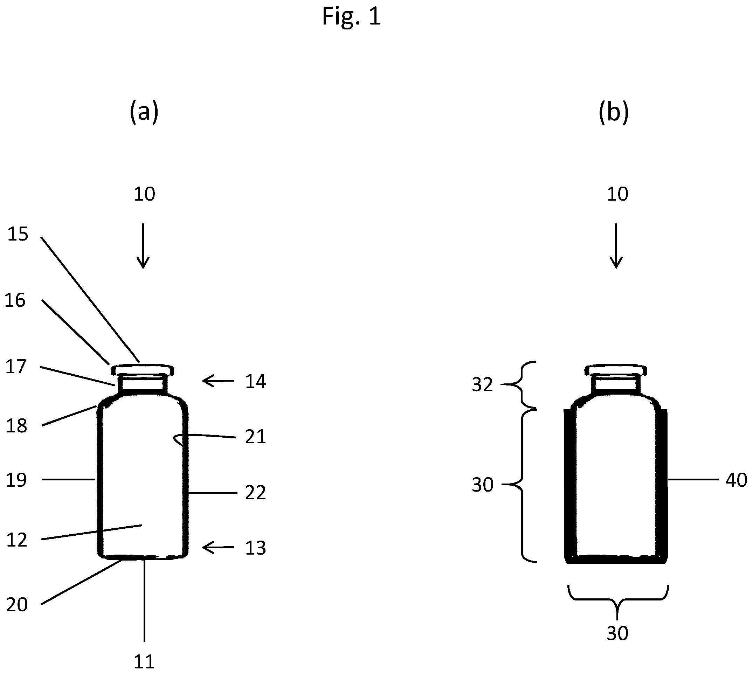

Fig. 1 (a) shows an example of a glass container 10 designed as a vial for pharmaceutical, medical or cosmetic applications, comprising a hollow body 11 made of a glass material, wherein the hollow body 11 surrounds an inner volume 12, and has a lower end 13 and an upper end 14, and wherein a container opening 15 extends through the upper end 14 into the inner volume 12. The hollow body 11 further comprises a container collar 16 surrounding the container opening 15, a container neck 17, a container shoulder 18, a container body 19, a container bottom 20 closing the lower end 15, and an inner container surface 21 facing the inner volume 12 and an outer container surface 22 facing away from the inner volume 12.

Fig. 1 (b) shows the glass container 10 from Fig. 1 (a), wherein the glass container 10 is coated on its outer container surface 22 with a coating 40 at least partially. In the example shown, the glass material of the hollow body 11 is covered with a coating 40 in the region of a coated partial area 30 of the outer container surface 22. The outer surface of the container is also uncoated partially. Therefore, the glass material of the hollow body 11 is exposed over an uncoated partial area 32 of the outer container surface 22. The inner container surface 21 is completely uncoated, i.e. the glass material of hollow body 11 is exposed over the entire inner container surface 21.

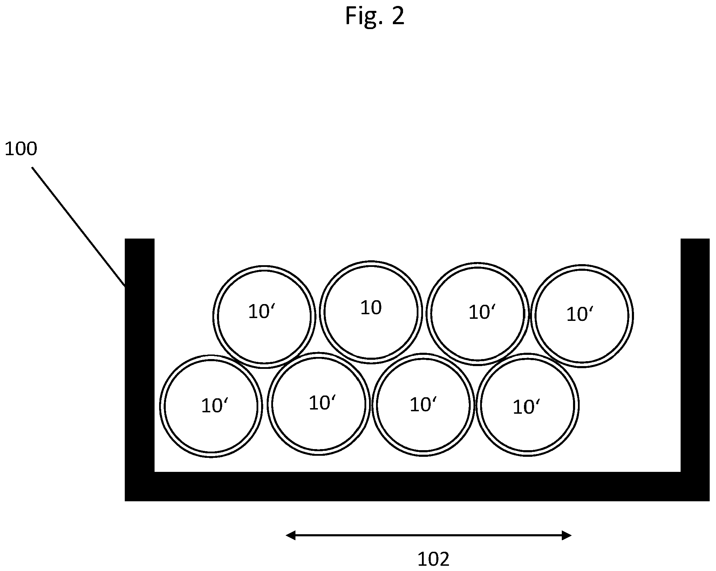

Fig. 2 shows a glass container 10 in a laboratory shaker 100, which is in contact with other glass containers 10'. It may be the shaker type KL2 from Edmund Bühler GmbH. In the laboratory shaker 100 the glass containers lie, e.g. on a surface of 7.5x7.5 cm2, sideways stacked on and next to each other, e.g. four containers below and four containers above. The glass container 10 is therefore in contact with other glass containers 10' such that the container body 19 of glass container 10 touches the container body of some of the other glass containers 10'. The glass containers can be shaken in the laboratory shaker 100 for a period of at least 5 minutes, preferably at least 10 minutes, especially preferably at least 30 minutes, in radial direction 102. A shaking frequency of 400 rpm and an amplitude of 1 cm can be used. Prior to shaking, the glass containers may, in particular, be heated at 350°C for 30 minutes and may be immersed in a bath of distilled water at a temperature of 80°C for 5 minutes before heating.

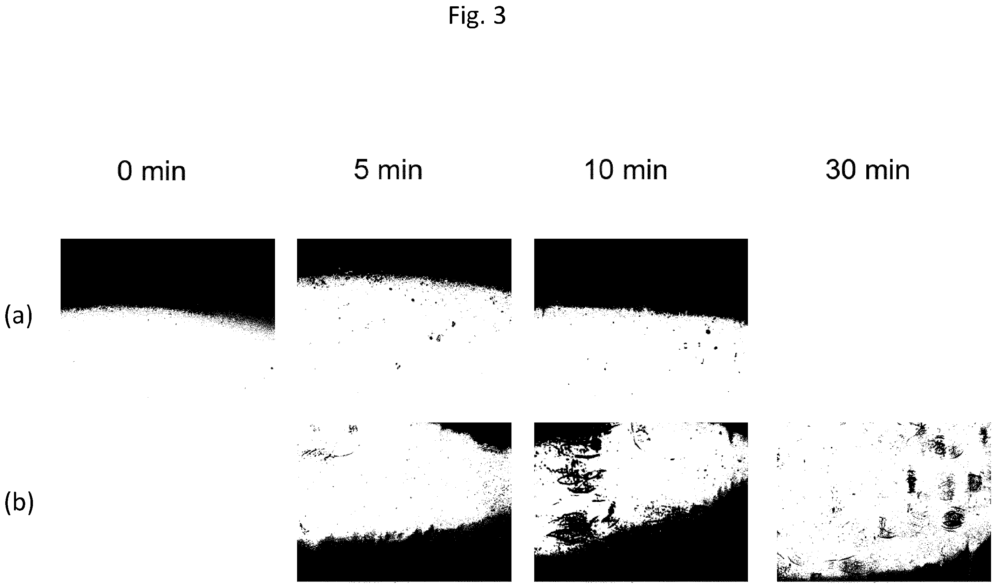

Fig. 3 (a) shows photographs of a glass container coated on its outer container surface at least partially with a coating, which was in contact with further glass containers as described above for different periods of time, while Fig. 3 (b) shows corresponding photographs of a glass container of the state of the art, wherein the glass containers were again in contact in particular as described above for different periods of time. As can be seen, the coated glass container shows increased scratch resistance.

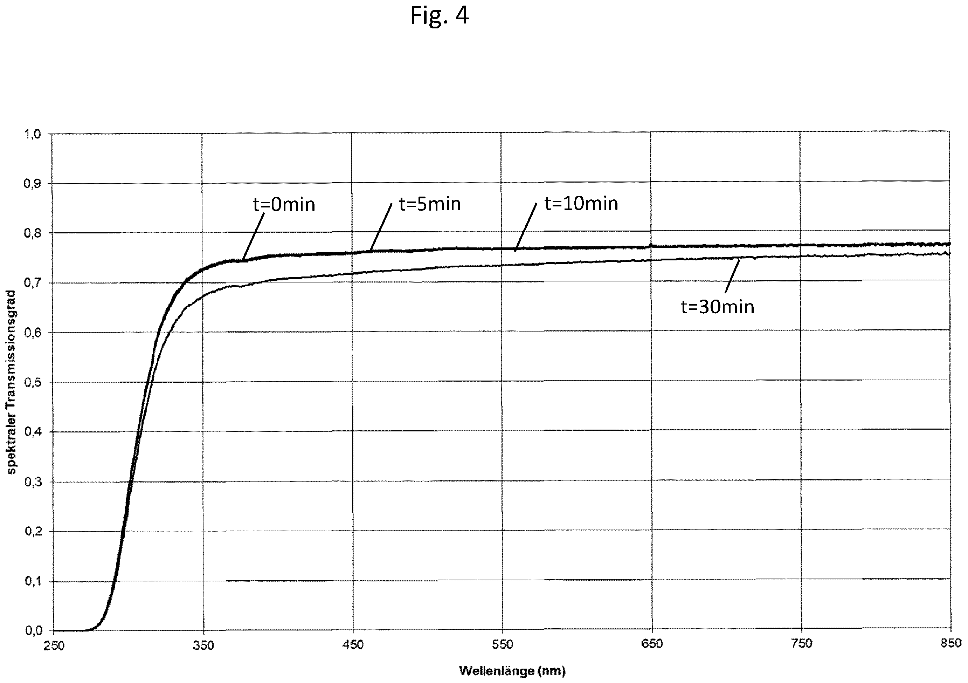

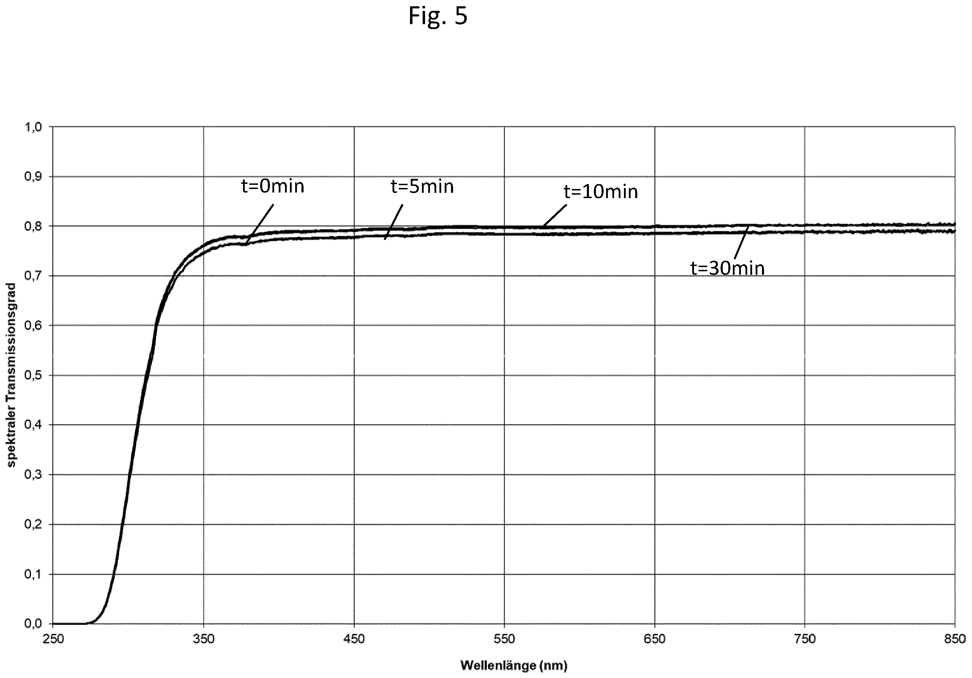

Fig. 4 shows the spectral transmittance of a glass container of the state of the art which was in contact with other glass containers as described above for different periods of time, while Fig. 5 shows the corresponding transmittance of a glass container coated on its outer surface at least partially with a coating, wherein the glass containers again were in contact in particular as described above for different periods of time. As can be seen, at a wavelength of 350 nm, the coated glass container is characterized by a transmittance which is higher than 0.7, preferably higher than 0.71, more preferably higher than 0.72, even more preferably higher than 0.73 and especially preferably higher than 0.74. At a wavelength of 550 nm the transmission is higher than 0.73, preferably higher than 0.74, more preferably higher than 0.75, even more preferably higher than 0.76 and especially preferably higher than 0.77 and at a wavelength of 750 nm the transmission is higher than 0.74, preferably higher than 0.75, more preferably higher than 0.76, even more preferably higher than 0.77 and especially preferably higher than 0.78.

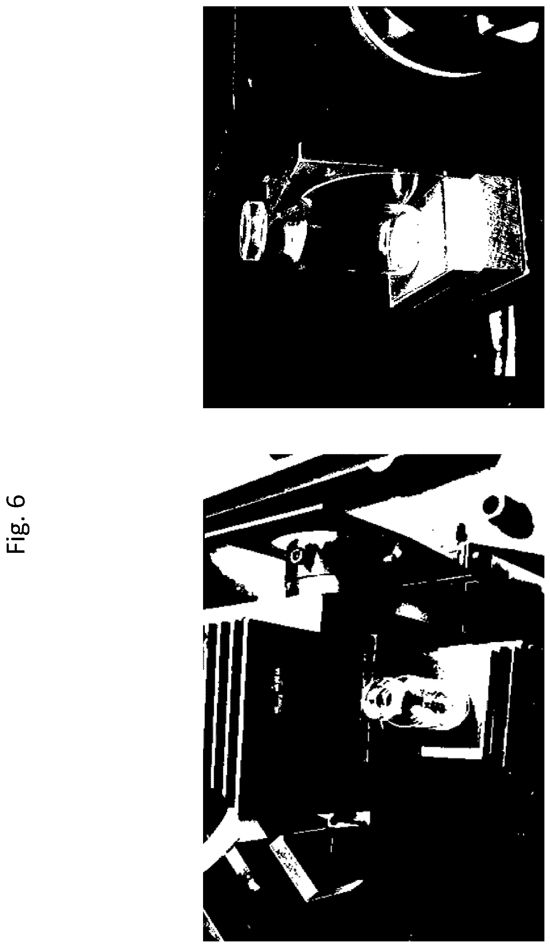

The transmission can be measured e.g. directly above the bottom of the container 20, as can be seen in the device shown in Fig. 6, in which the light (aperture diameter 5mm) passes through the container 3mm above the bottom and crosses the container wall twice.

The device shown in Fig. 6 can also be used to measure the yellowness index of the glass container according to ASTM D1925-70, wherein the glass containers again were in contact for different periods of time, in particular as described above. For example, the following values could be determined:

### Coated containers, "standard lighting type C":

| | 0 min | 5 min | 10 min | 30 min |
|---|---|---|---|---|
| **x** | 0,3106 | 0,3106 | 0,3106 | 0,3106 |
| **y** | 0,3171 | 0,3171 | 0,3171 | 0,3170 |
| **Y** | 78,3 | 79,9 | 78,5 | 79,6 |
| **Yellowness** | **0,9** | **0,9** | **0,9** | **0,9** |

### Uncoated containers, "standard lighting type C":

| | 0 min | 5 min | 10 min | 30 min |
|---|---|---|---|---|
| **x** | 0,3108 | 0,3110 | 0,3110 | 0,3125 |
| **y** | 0,3173 | 0,3174 | 0,3175 | 0,3188 |
| **Y** | 76,7 | 76,6 | 76,7 | 73,3 |
| **Yellowness** | **1,1** | **1,3** | **1,4** | **2,9** |

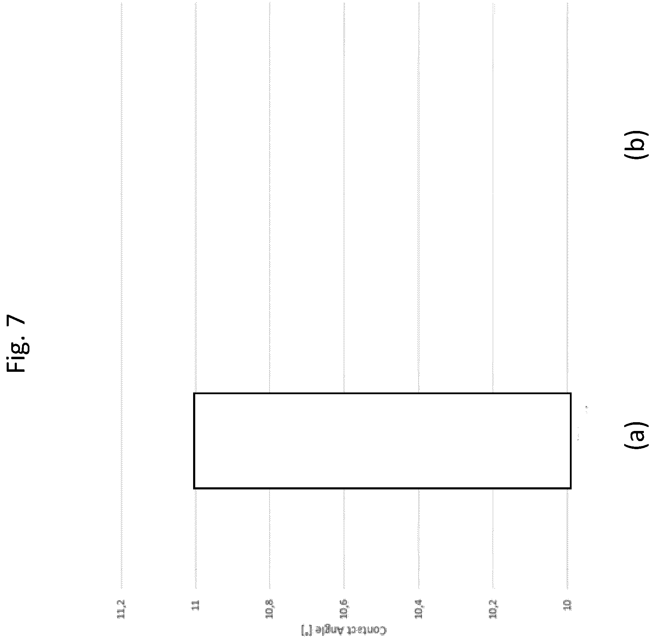

Fig. 7 (a) shows measurement results of the contact angle of n-hexadecane, which was applied in the form of drops in the region of the coated partial area 30 on the outer container surface 22 of the partially coated glass container 10 shown in Fig. 1 (b). As can be seen, the partially coated glass container 10 is characterized by the fact that the coated partial area 30 of the outer container surface 22 forms a contact angle between 10 and 12 degrees with respect to n-hexadecane.

For comparison, Fig. 7 (b) shows measurement results of the contact angle of n-hexadecane, which was applied as a drop at a comparable position on the outer container surface 22 of the uncoated glass container 10 shown in Fig. 1 (a). The contact angle is smaller than 10 degrees, i.e. the applied drop is distributed so flat on the container surface that the contact angle is almost impossible to measure.

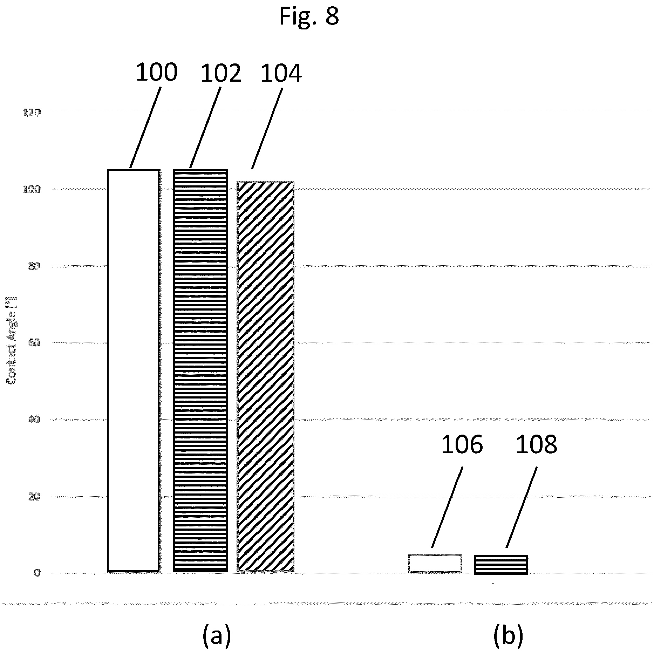

Fig. 8 (a) shows measurement results of the contact angle of water applied as drops in the area of the coated partial surface 30 on the outer container surface 22 of the partially coated glass container 10 shown in Fig. 1 (b). As can be seen, the partially coated glass container 10 is characterized by the fact that the coated partial surface 30 of the outer container surface 22 forms a contact angle between 90 and 120 degrees with respect to water. The graph labeled 100 shows measurement results for a glass container 10, which was washed, coated and dried, while the graph labeled 102 shows measurement results for a glass container 10, which was additionally thermally treated at 350°C for 1 hour, analogous to a depyrogenation process, and the graph labeled 104 shows measurement results for a glass container 10, which was washed again after the thermal treatment.

Fig. 8 (b) again shows for comparison measurement results of the contact angle of water, which was applied in the form of drops at a comparable position on the outer container surface 22 of the uncoated glass container 10 shown in Fig. 1 (a). The contact angle is smaller than 10 degrees or almost disappearing, i.e. the applied drop is distributed so flat on the container surface that the contact angle almost disappears. The graph labeled 106 shows measurement results for an untreated glass container 10, while the graph labeled 108 shows measurement results for an uncoated glass container 10 that has been thermally treated.

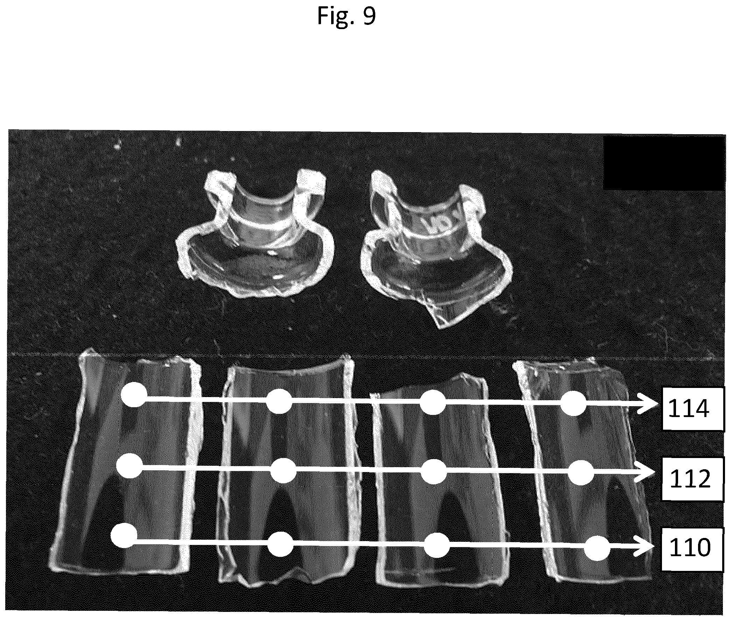

Fig. 9 shows several test points 110, 112, 114 on the inner container surface of the partially coated glass container 10 with partially coated outer container surface shown in Fig. 1 (b). At the test points shown, the contact angle of n-hexadecane and water, respectively, with the inner container surface was determined. The contact angle is smaller than 10 degrees in each case, i.e. the applied drop is distributed so flatly on the container surface that the contact angle is almost impossible to measure. This corresponds to the measurement results known from Fig. 7 (b) and 8 (b) for the uncoated glass container 10. The glass container coated on the outer container surface is therefore completely uncoated on the inner container surface.

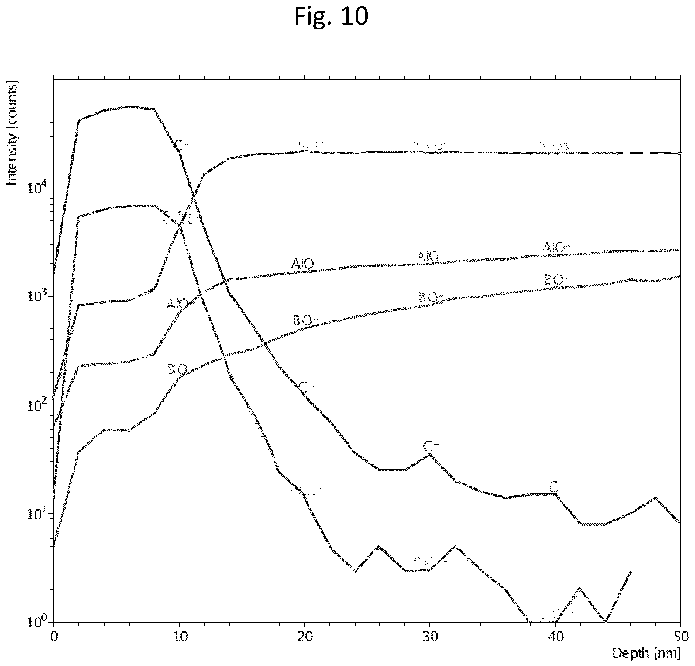

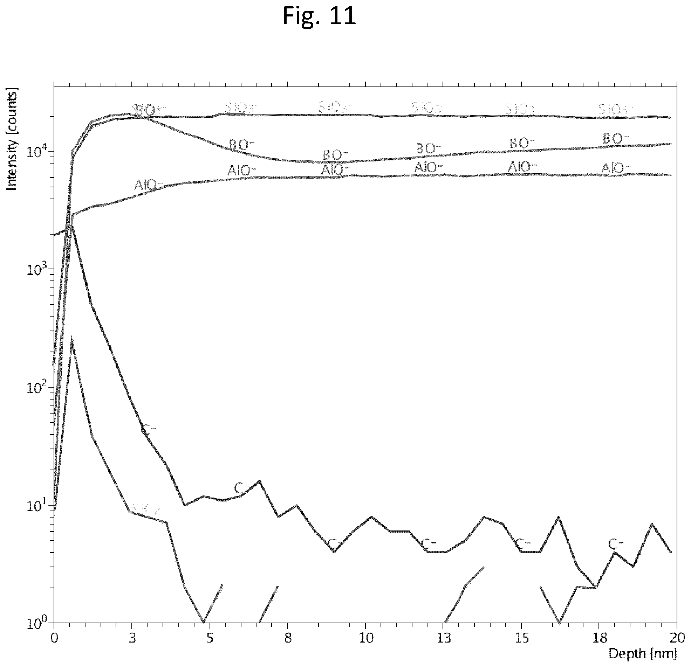

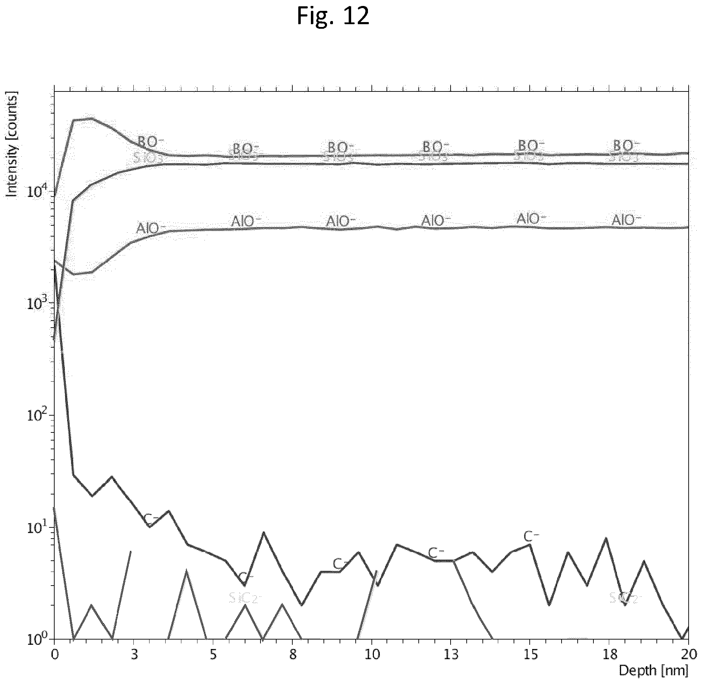

Figs. 10 to 12 show depth profiles of selected secondary ions at various locations on the container surface of the partially coated glass container 10 shown in Fig. 1 (b), wherein the depth profiles are given in the form of an equivalent thickness and are acquired using ary ion mass spectrometry (ToF-SIMS). The equivalent thickness is determined by first determining a sputter rate using secondary ion mass spectrometry (ToF-SIMS) with sputter parameters Cs and 2 keV on the basis of the reference glass BK7 and then using this sputter rate to determine the depth profiles. The measurement results shown in Fig. 10 refer to the outer container surface at the bottom of the container, the measurement results shown in Fig. 11 refer to the outer container surface centered on the container body and the measurement results shown in Fig. 12 refer to the inner container surface centered on the container body.

As can be seen from Figs. 10 and 11 for the container bottom and the container body on the outside of the glass container, the curves for C- and SiC2-, which serve as a signal for the coating, fall with increasing depth, while the curves for SiO3-, AlO- and BO-, which serve as a signal for the glass material, rise with increasing depth. Furthermore, Fig. 12 shows that the curves for C- and SiC2-, which serve as a signal for coating, do not show any measurable intensity. It can be seen from this that the partially coated glass container 10 is characterized in that the coating, which covers the outer container surface 22 in the area of the container bottom 20, has an equivalent thickness of less than 200 nm, preferably less than 100 nm, more preferably less than 50 nm and especially preferably less than 25 nm, and in that the coating which covers the outer container surface 22 in the region of the container body 19 has an equivalent thickness of less than 50 nm, preferably of less than 25 nm, more preferably of less than 10 nm and particularly preferably of less than 5 nm, and in that the inner container surface 21 is completely uncoated, i.e. the glass material is exposed over the entire inner container surface 21.

## Claims

1. Glass container (10), preferably vial for pharmaceutical, medical or cosmetic applications,
comprising a hollow body (11) of a glass material, said hollow body (11) surrounding an inner volume (12) and having a lower end (13) and an upper end (14), and wherein a container opening (15) extends through said upper end (14) into said inner volume (12), and wherein said hollow body (11) further comprises a container collar (16) surrounding the container opening (15), a container neck (17), a container shoulder (18), a container body (19), a container bottom (20) closing the lower end (15), and an inner container surface (21) facing the inner volume (12) and an outer container surface (22) facing away from the inner volume (12),
wherein the glass container (10) is coated on its outer container surface (22) partially with a coating (40),
wherein the outer container surface (22) is coated with the coating (40) such that the glass material of the hollow body (11) is covered with the coating (40) in the region of a coated partial area (30) of the outer container surface (22) and
wherein the outer container surface (22) is partially uncoated such that the glass material of the hollow body (11) is exposed over an uncoated partial area (32) of the outer container surface (22) and
wherein the uncoated partial area (32) of the outer container surface (22) completely encloses the region of the container collar (16).

2. Glass container (10), according to the preceding claim,
wherein the glass container (10) has a transmittance for light with a wavelength of 550 nm which is higher than 0.73,
wherein the transmittance is measurable at least at one point in the region of the container body (19) when the light passes radially and centrally through the glass container (10) such that the light first passes through the hollow body (11), then through the inner volume (12) and then again through the hollow body (11), and
wherein the glass container (10) preferably has the transmittance after contact of the glass container (10) with at least one further glass container.

3. Glass container (10), according to one of the preceding claims,
wherein the glass container (10) has a yellowness index which is lower than 2.5,
wherein the yellowness index is measurable at least at one point in the region of the container body (19) according to ASTM D1925-70 when the light passes radially and centrally through the glass container (10) such that the light first passes through the hollow body (11), then through the inner volume (12) and then again through the hollow body (11), and
wherein the glass container (10) preferably has the yellowness index after contact of the glass container (10) with at least one further glass container.

4. Glass container (10), according to one of the preceding claims,
wherein the outer container surface (22) of the glass container (10) has a mean roughness Rₐ which is lower than 20 nm,
wherein the average roughness value Rₐ is measurable at least at one point in the region of the container body (19), preferably by means of white light interference microscopy, and
wherein the glass container (10) preferably has the mean roughness Rₐ after contact of the glass container (10) with at least one further glass container.

5. Glass container (10) according to one of the claims 2 to 4,
wherein the contact of the glass container (10) with at least one further glass container comprises a contact in which the container body (19) of the glass container (10) is in contact with the container body of at least one further glass container of the same type, and the at least two glass containers were shaken for a period of at least 5 minutes in the radial direction.

6. Glass container (10) according to claim 5,
wherein before the shaking the glass containers were heated for 1 min to 60 min to 100°C to 600°C.

7. Glass container (10) according to claim 5 or 6,
wherein between the heating and the shaking has passed less than 8 hours.

8. Glass container (10) according to one of claims 5 to 7,
wherein before the heating the glass containers were immersed in a bath of water at a temperature of 40°C to 100°C for 1 s to 20 min.

9. Glass container (10) according to one of claims 2 to 8,
wherein the glass container meets the transmittance, the yellowness index and/or the mean roughness Rₐ after running through a test program,
wherein the running through the test program comprises the following steps: heating the glass containers to 350°C for 30 minutes, bringing the glass container (10) into contact with at least one further glass container so that the container body (19) of the glass container (10) is in contact with the container body of at least one further glass container of the same type, and shaking the at least two glass containers for a period of 5 minutes in the radial direction, wherein the bringing in contact and shaking is performed within 1h after heating, and optionally immersing the glass containers in a bath of water with a temperature of 80°C for 5 min, wherein the immersing takes place before heating.

10. Glass container (10) according to one of the preceding claims,
wherein the coating (40) with which the outer container surface (22) is at least partially coated, comprises a silicone
wherein the coating is preferably formed as a dried silicone emulsion, which particularly preferred is post-cured.

11. Glass container (10) according to one of the preceding claims,
wherein the inner container surface (21) is completely uncoated such that the glass material of the hollow body (11) is exposed over the entire inner container surface (21).

12. Glass container (10) according to one of the preceding claims,
wherein the coated partial surface (30) of the outer container surface (22) encloses the region of the container body (19) and/or the region of the container bottom (20) at least partially, in particular completely, and/or
wherein the uncoated partial area (32) of the outer container surface (22) corresponds to the entire outer container surface (22) minus the coated partial area (30) of the outer container surface (22) and/or
wherein the uncoated partial area (32) of the outer container surface (22) encloses the region of the container neck (17) and particularly preferably encloses the region of the container shoulder (18) at least partially, in particular completely.

13. Glass container (10) according to one of the preceding claims,
wherein the coating, which covers the outer container surface (22) in the region of the container body (19), has at least at one point an equivalent thickness related to the glass material of less than 50 nm and
wherein the coating, which covers the outer container surface (22) in the region of the container bottom (20), has at least at one point an equivalent thickness related to the glass material of less than 200 nm,
wherein the equivalent thickness related to the glass material is determinable by determining a sputter rate by means of secondary ion mass spectrometry (ToF-SIMS) on the basis of a reference glass and using this sputter rate for evaluating the secondary ion mass spectrometry of the coating.

14. Glass container (10) according to one of the preceding claims,
wherein the equivalent thickness of the coating which covers the outer container surface (22) in the region of the container body (19) and the equivalent thickness of the coating which covers the outer container surface (22) in the region of the container bottom (20) are in a ratio to one another which is in the range from 1:10 to 10:1.

15. Glass container (10) according to one of the preceding claims,
wherein the coated partial surface (30) of the outer container surface (22) forms a contact angle between 10 and 12 degrees with respect to hexadecane and
wherein the uncoated partial surface (30) of the outer container surface (22)forms a contact angle of less than 10 degrees with respect to hexadecane.

## Patentansprüche

1. Glasbehälter (10), vorzugsweise Fläschchen für pharmazeutische, medizinische oder kosmetische Anwendungen,
umfassend einen Hohlkörper (11) aus einem Glasmaterial, wobei der Hohlkörper (11) ein Innenvolumen (12) umschließt und ein unteres Ende (13) sowie ein oberes Ende (14) aufweist, und wobei sich eine Behälteröffnung (15) durch das obere Ende (14) hindurch in das Innenvolumen (12) hinein erstreckt, und wobei der Hohlkörper (11) ferner einen Behälterkragen (16) aufweist, der die Behälteröffnung (15) umschließt, einen Behälterhals (17), eine Behälterschulter (18), einen Behälterkörper (19), einen Behälterboden (20), der das untere Ende (13) verschließt, sowie eine innere Behälteroberfläche (21), die dem Innenvolumen (12) zugewandt ist, und eine äußere Behälteroberfläche (22), die von dem Innenvolumen (12) abgewandt ist,
wobei der Glasbehälter (10) auf seiner äußeren Behälteroberfläche (22) teilweise mit einer Beschichtung (40) beschichtet ist,
wobei die äußere Behälteroberfläche (22) derart mit der Beschichtung (40) beschichtet ist, dass das Glasmaterial des Hohlkörpers (11) im Bereich einer beschichteten Teilfläche (30) der äußeren Behälteroberfläche (22) von der Beschichtung (40) bedeckt ist, und
wobei die äußere Behälteroberfläche (22) teilweise unbeschichtet ist, so dass das Glasmaterial des Hohlkörpers (11) über eine unbeschichtete Teilfläche (32) der äußeren Behälteroberfläche (22) hin freiliegt, und
wobei die unbeschichtete Teilfläche (32) der äußeren Behälteroberfläche (22) den Bereich des Behälterkragens (16) vollständig umschließt.

2. Glasbehälter (10) gemäß dem vorhergehenden Anspruch,
wobei der Glasbehälter (10) einen Transmissionsgrad von größer 0,73 für Licht mit einer Wellenlänge von 550 nm aufweist,
wobei der Transmissionsgrad an mindestens einem Punkt im Bereich des Behälterkörpers (19) messbar ist, wenn das Licht radial und mittig durch den Glasbehälter (10) in solcher Weise hindurchtritt, dass das Licht zunächst durch den Hohlkörper (11), danach durch das Innenvolumen (12) und danach erneut durch den Hohlkörper (11) durchtritt, und
wobei der Glasbehälter (10) den Transmissionsgrad vorzugsweise nach Kontakt des Glasbehälters (10) mit mindestens einem weiteren Glasbehälter aufweist.

3. Glasbehälter (10) nach einem der vorhergehenden Ansprüche,
wobei der Glasbehälter (10) einen Gelbwertindex von weniger als 2,5 aufweist,
wobei der Gelbwertindex an mindestens einem Punkt im Bereich des Behälterkörpers (19) gemäß ASTM D1925-70 messbar ist, wenn das Licht radial und mittig durch den Glasbehälter (10) in solcher Weise hindurchtritt, dass das Licht zunächst durch den Hohlkörper (11), danach durch das Innenvolumen (12) und danach erneut durch den Hohlkörper (11) durchtritt, und
wobei der Glasbehälter (10) den Gelbwertindex vorzugsweise nach Kontakt des Glasbehälters (10) mit mindestens einem weiteren Glasbehälter aufweist.

4. Glasbehälter (10) nach einem der vorhergehenden Ansprüche,
wobei die äußere Behälteroberfläche (22) des Glasbehälters (10) eine mittlere Rauheit Rₐ von weniger als 20 nm aufweist,
wobei der mittlere Rauheitswert Rₐ an mindestens einem Punkt im Bereich des Behälterkörpers (19) messbar ist, vorzugsweise mittels Weißlicht-Interferenzmikroskopie, und
wobei der Glasbehälter (10) die mittlere Rauheit Rₐ vorzugsweise nach Kontakt des Glasbehälters (10) mit mindestens einem weiteren Glasbehälter aufweist.

5. Glasbehälter (10) nach einem der Ansprüche 2 bis 4,
wobei der Kontakt des Glasbehälters (10) mit mindestens einem weiteren Glasbehälter einen Kontakt umfasst, bei dem der Behälterkörper (19) des Glasbehälters (10) den Behälterkörper mindestens eines weiteren Glasbehälters desselben Typs berührt hat und die mindestens zwei Glasbehälter für eine Dauer von mindestens 5 Minuten in radialer Richtung geschüttelt wurden.

6. Glasbehälter (10) nach Anspruch 5,
wobei die Glasbehälter vor dem Schütteln für 1 Minute bis zu 60 Minuten auf 100 °C bis 600 °C erhitzt wurden.

7. Glasbehälter (10) nach Anspruch 5 oder 6,
wobei zwischen dem Erhitzen und dem Schütteln weniger als 8 Stunden verstrichen sind.

8. Glasbehälter (10) nach einem der Ansprüche 5 bis 7,
wobei die Glasbehälter vor dem Erhitzen für 1 s bis zu 20 min in ein Wasserbad mit einer Temperatur von 40 °C bis 100 °C eingetaucht wurden.

9. Glasbehälter (10) nach einem der Ansprüche 2 bis 8,
wobei der Glasbehälter nach Durchlaufen eines Prüfprogramms die Werte von Transmissionsgrad, Gelbwertindex und/oder mittlerer Rauheit Rₐ erfüllt,
wobei das Durchlaufen des Prüfprogramms die folgenden Schritte umfasst: Erhitzen der Glasbehälter auf 350 °C für 30 Minuten, In-Kontakt-Bringen des Glasbehälters (10) mit mindestens einem weiteren Glasbehälter, so dass der Behälterkörper (19) des Glasbehälters (10) den Behälterkörper mindestens eines weiteren Glasbehälters desselben Typs berührt, und Schütteln der mindestens zwei Glasbehälter für eine Dauer von 5 Minuten in radialer Richtung, wobei das In-Kontakt-Bringen und das Schütteln innerhalb von 1 Stunde nach dem Erhitzen und optionalem Eintauchen der Glasbehälter in ein Wasserbad mit einer Temperatur von 80 °C für 5 Minuten erfolgt, wobei das Eintauchen vor dem Erhitzen erfolgt.

10. Glasbehälter (10) nach einem der vorhergehenden Ansprüche,
wobei die Beschichtung (40), mit der die äußere Behälteroberfläche (22) zumindest teilweise beschichtet ist, ein Silikon umfasst,
wobei die Beschichtung vorzugsweise als eine getrocknete Silikonemulsion ausgebildet ist, die besonders bevorzugt nachgehärtet ist.

11. Glasbehälter (10) nach einem der vorhergehenden Ansprüche,
wobei die innere Behälteroberfläche (21) vollständig unbeschichtet ist, so dass das Glasmaterial des Hohlkörpers (11) über die gesamte innere Behälteroberfläche (21) hin freiliegt.

12. Glasbehälter (10) nach einem der vorhergehenden Ansprüche,
wobei die beschichtete Teilfläche (30) der äußeren Behälteroberfläche (22) den Bereich des Behälterkörpers (19) und/oder den Bereich des Behälterbodens (20) zumindest teilweise, insbesondere vollständig, umschließt, und/oder
wobei die unbeschichtete Teilfläche (32) der äußeren Behälteroberfläche (22) der gesamten äußeren Behälteroberfläche (22) abzüglich der beschichteten Teilfläche (30) der äußeren Behälteroberfläche (22) entspricht, und/oder
wobei die unbeschichtete Teilfläche (32) der äußeren Behälteroberfläche (22) den Bereich des Behälterhalses (17) und besonders bevorzugt den Bereich der Behälterschulter (18) zumindest teilweise, insbesondere vollständig, umschließt.

13. Glasbehälter (10) nach einem der vorhergehenden Ansprüche,
wobei die Beschichtung, welche die äußere Behälteroberfläche (22) im Bereich des Behälterkörpers (19) bedeckt, an mindestens einer Stelle eine äquivalente Dicke bezogen auf das Glasmaterial von weniger als 50 nm aufweist, und
wobei die Beschichtung, welche die äußere Behälteroberfläche (22) im Bereich des Behälterbodens (20) bedeckt, an mindestens einer Stelle eine äquivalente Dicke bezogen auf das Glasmaterial von weniger als 200 nm aufweist,
wobei die äquivalente Dicke bezogen auf das Glasmaterial ermittelbar ist durch Bestimmung einer Sputterrate mittels Sekundärionen-Massenspektrometrie (ToF-SIMS) auf Basis eines Referenzglases und Verwendung dieser Sputterrate zur Auswertung der Sekundärionen-Massenspektrometrie der Beschichtung.

14. Glasbehälter (10) nach einem der vorhergehenden Ansprüche,
wobei die äquivalente Dicke der Beschichtung, welche die äußere Behälteroberfläche (22) im Bereich des Behälterkörpers (19) bedeckt, und die äquivalente Dicke der Beschichtung, welche die äußere Behälteroberfläche (22) im Bereich des Behälterbodens (20) bedeckt, zueinander in einem Verhältnis im Bereich von 1:10 bis 10:1 stehen.

15. Glasbehälter (10) nach einem der vorhergehenden Ansprüche,
wobei die beschichtete Teilfläche (30) der äußeren Behälteroberfläche (22) einen Kontaktwinkel zwischen 10 und 12 Grad gegenüber Hexadecan bildet und
wobei die unbeschichtete Teilfläche (32) der äußeren Behälteroberfläche (22) einen Kontaktwinkel von weniger als 10 Grad gegenüber Hexadecan bildet.

## Revendications

1. Récipient en verre (10), de préférence flacon destiné à des applications pharmaceutiques, médicales ou cosmétiques,
comprenant un corps creux (11) en un matériau en verre, ledit corps creux (11) entourant un volume interne (12) et ayant une extrémité inférieure (13) et une extrémité supérieure (14), et dans lequel un orifice (15) de récipient s'étend à travers ladite extrémité supérieure (14) à l'intérieur dudit volume interne (12), et dans lequel ledit corps creux (11) comprend en outre une bague (16) de récipient entourant l'orifice (15) de récipient, un col (17) de récipient, un épaulement (18) de récipient, un corps (19) de récipient, un fond (20) de récipient fermant l'extrémité inférieure (15), et une surface interne (21) de récipient orientée vers le volume interne (12) et une surface externe (22) de récipient orientée à l'opposé du volume interne (12),
dans lequel le récipient en verre (10) est partiellement revêtu avec un revêtement (40) sur sa surface externe (22) de récipient,
dans lequel la surface externe (22) de récipient est revêtue avec le revêtement (40) de façon telle que le matériau en verre du corps creux (11) est recouvert par le revêtement (40) dans la région d'une zone partielle revêtue (30) de la surface externe (22) de récipient et
dans lequel la surface externe (22) de récipient est partiellement non revêtue de sorte que le matériau en verre du corps creux (11) est exposé sur une zone partielle non revêtue (32) de la surface externe (22) de récipient et
dans lequel la zone partielle non revêtue (32) de la surface externe (22) de récipient enclôt complètement la région de la bague (16) de récipient.

2. Récipient en verre (10) selon la revendication précédente,
dans lequel le récipient en verre (10) présente une transmittance de la lumière ayant une longueur d'onde de 550 nm qui est supérieure à 0,73,
dans lequel la transmittance est mesurable au moins en un point dans la région du corps (19) de récipient lorsque la lumière passe radialement et centralement à travers le récipient en verre (10) de façon telle que la lumière passe d'abord à travers le corps creux (11), puis à travers le volume interne (12) et ensuite de nouveau à travers le corps creux (11), et
dans lequel le récipient en verre (10) présente de préférence la transmittance après contact du récipient en verre (10) avec au moins un récipient en verre supplémentaire.

3. Récipient en verre (10) selon l'une des revendications précédentes,
dans lequel le récipient en verre (10) présente un indice de jaunissement qui est inférieur à 2,5,
dans lequel l'indice de jaunissement est mesurable au moins en un point dans la région du corps (19) de récipient selon ASTM D1925-70 lorsque la lumière passe radialement et centralement à travers le récipient en verre (10) de façon telle que la lumière passe d'abord à travers le corps creux (11), puis à travers le volume interne (12) et ensuite de nouveau à travers le corps creux (11), et
dans lequel le récipient en verre (10) présente de préférence l'indice de jaunissement après contact du récipient en verre (10) avec au moins un récipient en verre supplémentaire.

4. Récipient en verre (10) selon l'une des revendications précédentes,
dans lequel la surface externe (22) de récipient du récipient en verre (10) présente une rugosité moyenne Rₐ qui est inférieure à 20 nm,
dans lequel la valeur Rₐ de la rugosité moyenne est mesurable au moins en un point dans la région du corps (19) de récipient, de préférence au moyen de microscopie à interférence de lumière blanche, et
dans lequel le récipient en verre (10) présente de préférence la rugosité moyenne Rₐ après contact du récipient en verre (10) avec au moins un récipient en verre supplémentaire.

5. Récipient en verre (10) selon l'une des revendications 2 à 4,
dans lequel le contact du récipient en verre (10) avec au moins un récipient en verre supplémentaire comprend un contact dans lequel le corps (19) de récipient du récipient en verre (10) est en contact avec le corps de récipient d'au moins un récipient en verre supplémentaire du même type, et lesdits au moins deux récipients en verre ont été secoués pendant une durée d'au moins 5 minutes dans la direction radiale.

6. Récipient en verre (10) selon la revendication 5,
dans lequel avant le secouement les récipients en verre ont été chauffés pendant 1 min à 60 min à 100 °C à 600 °C.

7. Récipient en verre (10) selon la revendication 5 ou 6,
dans lequel moins de 8 heures se sont écoulées entre le chauffage et le secouement.

8. Récipient en verre (10) selon l'une des revendications 5 à 7,
dans lequel avant le chauffage les récipients en verre ont été immergés dans un bain d'eau à une température de 40 °C à 100 °C pendant 1 s à 20 min.

9. Récipient en verre (10) selon l'une des revendications 2 à 8,
dans lequel le récipient en verre satisfait à la transmittance, à l'indice de jaunissement et/ou à la rugosité moyenne Rₐ après passage par un programme d'essai,
dans lequel le passage par le programme d'essai comprend les étapes suivantes consistant à :
chauffer les récipients en verre jusqu'à 350 °C pendant 30 minutes, mettre le récipient en verre (10) en contact avec au moins un récipient en verre supplémentaire de manière que le corps (19) de récipient du récipient en verre (10) soit en contact avec le corps de récipient d'au moins un récipient en verre supplémentaire du même type, et secouer lesdits au moins deux récipients en verre pendant une durée de 5 minutes dans la direction radiale, la mise en contact et le secouement étant effectués en moins de 1 h après chauffage, et en option immerger les récipients en verre dans un bain d'eau à une température de 80 °C pendant 5 minutes, l'immersion ayant lieu avant le chauffage.

10. Récipient en verre (10) selon l'une des revendications précédentes,
dans lequel le revêtement (40), avec lequel est au moins partiellement revêtue la surface externe (22) de récipient, comprend un silicone ;
dans lequel le revêtement est de préférence formé sous forme d'une émulsion de silicone séchée, qui de façon particulièrement préférée est post-durcie.

11. Récipient en verre (10) selon l'une des revendications précédentes,
dans lequel la surface interne (21) de récipient est entièrement non revêtue, de sorte que le matériau en verre du corps creux (11) est exposé sur l'intégralité de la surface interne (21) de récipient.

12. Récipient en verre (10) selon l'une des revendications précédentes
dans lequel la surface partielle revêtue (30) de la surface externe (22) de récipient enclôt au moins partiellement, en particulier complètement, la région du corps (19) de récipient et/ou la région du fond (20) de récipient, et/ou
dans lequel la zone partielle non revêtue (32) de la surface externe (22) de récipient correspond à l'intégralité de la surface externe (22) de récipient moins la zone partielle revêtue (30) de la surface externe (22) de récipient et/ou
dans lequel la zone partielle non revêtue (32) de la surface externe (22) de récipient enclôt la région du col (17) de récipient et de façon particulièrement préférée, enclôt au moins partiellement, en particulier complètement, la région de l'épaulement (18) de récipient.

13. Récipient en verre (10) selon l'une des revendications précédentes,
dans lequel le revêtement, qui recouvre la surface externe (22) de récipient dans la région du corps (19) de récipient, a au moins en un point une épaisseur équivalente, rapportée au matériau en verre, inférieure à 50 nm, et
dans lequel le revêtement, qui recouvre la surface externe (22) de récipient dans la région du fond (20) de récipient, a au moins en un point une épaisseur équivalente, rapportée au matériau en verre, inférieure à 200 nm,
l'épaisseur équivalente rapportée au matériau en verre pouvant être déterminée en déterminant une vitesse de pulvérisation au moyen de spectrométrie de masse des ions secondaires (ToF-SIMS) sur la base d'un verre de référence et en utilisant cette vitesse de pulvérisation pour évaluer la spectrométrie de masse des ions secondaires du revêtement.

14. Récipient en verre (10) selon l'une des revendications précédentes,
dans lequel l'épaisseur équivalente du revêtement qui recouvre la surface externe (22) de récipient dans la région du corps (19) de récipient et l'épaisseur équivalente du revêtement qui recouvre la surface externe (22) de récipient dans la région du fond (20) de récipient présentent entre elles un rapport qui se situe dans la plage de 1:10 à 10:1.

15. Récipient en verre (10) selon l'une des revendications précédentes,
dans lequel la surface partielle revêtue (30) de la surface externe (22) de récipient forme un angle de contact compris entre 10 et 12 degrés vis-à-vis de l'hexadécane et
dans lequel la surface partielle non revêtue (30) de la surface externe (22) de récipient forme un angle de contact inférieur à 10 degrés vis-à-vis de l'hexadécane.
